# EUROPÄISCHE PATENTSCHRIFT

(11) **EP 2 251 582 B1**
(45) Veröffentlichungstag und Bekanntmachung des Hinweises auf die Patenterteilung: **09.05.2012**
(21) Anmeldenummer: 09159857.3
(22) Anmeldetag: 11.05.2009
(51) Int. Cl.: F16L 39/00

(54) **System zur Trennung von Doppelrohrleitungen**
System for separating double pipe conduits
Système de séparation de conduites à double tuyau

(43) Veröffentlichungstag der Anmeldung: 17.11.2010
(73) Patentinhaber: Georg Fischer Rohrleitungssysteme AG, 8201 Schaffhausen (CH)
(72) Erfinder: Bardoczy, Laszlo, 8200 Schaffhausen (CH); Rösch, Jürgen, 79853 Lenzkirch-Grünwald (DE); Hablützel, Edwin, 8200 Schaffhausen (CH)
(74) Vertreter: De Colle, Piergiacomo

(56) Entgegenhaltungen:
- CH-A5- 688 971
- FR-A- 527 140
- US-A- 5 831 149

## Beschreibung

Die Erfindung bezieht sich auf ein System zur Trennung von koaxial angeordneten Doppelrohrleitungen umfassend zwei Aussenrohranschlusselemente, zwei Innenrohranschlusselemente, ein äusseres Verbindungselement zur lösbaren Verbindung mit der Aussenrohrleitung und ein inneres Verbindungselement zur lösbaren Verbindung mit der Innenrohrleitung, wobei die Innenrohranschlusselemente als innere Bundbuchsenteile ausgebildet sind, wobei das innere Verbindungselement mittels Überwurfmuttern lösbar verbunden mit den inneren Bundbuchsenteilen angeordnet ist, und wobei das äussere Verbindungselement mittels weitere äussere Bundbuchsenteile und weiteren äusseren Überwurfmuttern lösbar verbunden mit den Aussenrohranschlusselementen angeordnet ist.

Im Rohrleitungsbau, insbesondere beim Transport von umweltgefährdenden Medien werden Doppelrohrleitungen eingesetzt. Die Medien sind flüssig oder gasförmig. Doppelrohrleitungssysteme bestehen aus einer äusseren Rohrleitung, in welche die mediumsführende innere Rohrleitung integriert ist. Die äussere Rohrleitung dient als Schutzmantel für die innere Rohrleitung. Der Zwischenraum zwischen der äusseren und der inneren Rohrleitung dient als Auffangbehälter bei allfälligen Leckagen aus der inneren Rohrleitung. Für die innere und äussere Rohrleitung können, je nach Verträglichkeit mit dem Medium, unterschiedliche thermoplastische Kunststoffe verwendet werden. Der Zwischenraum dient entweder als Übenrvachungsraum für Leckagen aus der inneren Rohrleitung oder um die Temperatur des Mediums in der inneren Rohrleitung zu stabilisieren. Mit Doppelrohrleitungen wird das Gefahrenpotential beim Transport von gefährlichen Medien vermindert. Im Schadensfall kann mit einem Leckortungssystem eine undichte Stelle rasch aufgefunden werden.

Aus der CH 688 971 A5 ist eine Anordnung einer Armatur in einem Doppelrohrsystem aus Kunststoff bekannt. Zwischen den zwei Enden der äusseren Rohrleitung ist ein T-förmiges Gehäuse aus Kunststoff angeordnet. Zwei gegenüber liegende Enden des T-förmigen Gehäuses werden mit je einem Flanschbereich der äusseren Rohrleitungen verbunden. Das dritte Ende des T-förmigen Gehäuses wird mit einem Deckel abgeschlossen, durch den eine Kupplung zur Betätigung der Spindel der Armatur drehbar hindurchgeführt wird. Die Flanschbereiche der äusseren Rohrleitung weisen ein Innengewinde auf, in welchem Justierbüchsen eingeschraubt werden können. Die Justierbüchsen sind rohrförmige Sonderbauteile, die auf der Innenseite die Enden der inneren Rohrleitung aufnehmen, an einem Ende an die Armatur anschlagen und auf dem anderen Ende ein mit dem Innengewinde der äusseren Rohrleitung zusammenpassendes Aussengewinde aufweisen.

Ausgehend von diesem Stand der Technik ist es Aufgabe der Erfindung, ein System zur Trennung von koaxial angeordneten Doppelrohrleitungen anzugeben, das mit möglichst modularen Bauteilen hergestellt werden kann und das bei einem Ausbau oder Umbau möglichst einfach mechanisch getrennt werden kann.

Diese Aufgabe wird gelöst durch ein System zur Trennung von koaxial angeordneten Doppelrohrleitungen umfassend zwei Aussenrohranschlusselemente, zwei Innenrohranschlusselemente, ein äusseres Verbindungselement zur lösbaren Verbindung mit der Aussenrohrleitung und ein inneres Verbindungselement zur lösbaren Verbindung mit der Innenrohrleitung, wobei die Innenrohranschlusselemente als innere Bundbuchsenteile ausgebildet sind, wobei das innere Verbindungselement mittels Überwurfmuttern lösbar verbunden mit den inneren Bundbuchsenteifen angeordnet ist, und wobei das äussere Verbindungselement mittels weitere äussere Bundbuchsenteile und weiteren äusseren Überwurfmuttern lösbar verbunden mit den Aussenrohranschlusselementen angeordnet ist, dadurch gekennzeichnet, dass jedes Aussenrohranschiusselement am Aussenumfang einen Anschlag für das äussere Bundbuchsenteil aufweist, dass das Aussenrohranschlusselement am Innenumfang einen Anschlag für das innere Bundbuchsenteil aufweist und dass das Aussenrohranschlusselement Durchgangsbohrungen für das Medium im Mantelraum des Doppelrohrleitungssystems aufweist.

Bevorzugte Weiterbildungen der Erfindung ergeben sich aus den abhängigen Ansprüchen.

Es ist von Vorteil, dass das System möglichst einfach an verschiedenen Aufgabenstellungen angepasst werden kann. Dies wird dadurch erreicht, dass das innere Verbindungselement als ein Rückschlagventil ausgebildet ist. Dies wird auch dadurch erreicht, dass das innere Verbindungselement als eine Rohrverschraubung mit einem Bundbuchsenteil und einer Überwurfmutter ausgebildet ist. Dies wird weiterhin auch dadurch erreicht, dass das innere Verbindungselement als ein Ventilgehäuse mit einem Verschlussteil ausgebildet ist. Auch bei einem unterschiedlichen inneren Verbindungselement bleiben sämtliche übrige Bauteile des Systems unverändert.

Das System besteht im Wesentlichen aus zwei in einander angeordneten Gehäusen einer Armatur, wobei das innere Element mindestens zwei Nenngrössen kleiner ausgeführt ist als das äussere Verbindungselement.

Ein Ausführungsbeispiel der Erfindung wird anhand der Figuren beschrieben. Es zeigen:
Figur 1 einen Schnitt durch ein erfindungsgemässes System zur Trennung von koaxial angeordneten Doppelrohrleitungen,
Figur 2 eine perspektivische Sicht auf ein Aussenrohrelement des Systems zur Trennung von koaxial angeordneten Doppelrohrleitungen,
Figur 3 einen Schnitt durch das Aussenrohrelement von Figur 2,
Figur 4 einen Schnitt durch ein weiteres System zur Trennung von koaxial angeordneten Doppelrohrleitungen,
Figur 5 einen Schnitt durch ein weiteres System zur Trennung von koaxial angeordneten Doppelrohrleitungen und
Figur 6 eine perspektivische Sicht auf das System zur Trennung von koaxial angeordneten Doppelrohrleitungen von Figur 1.

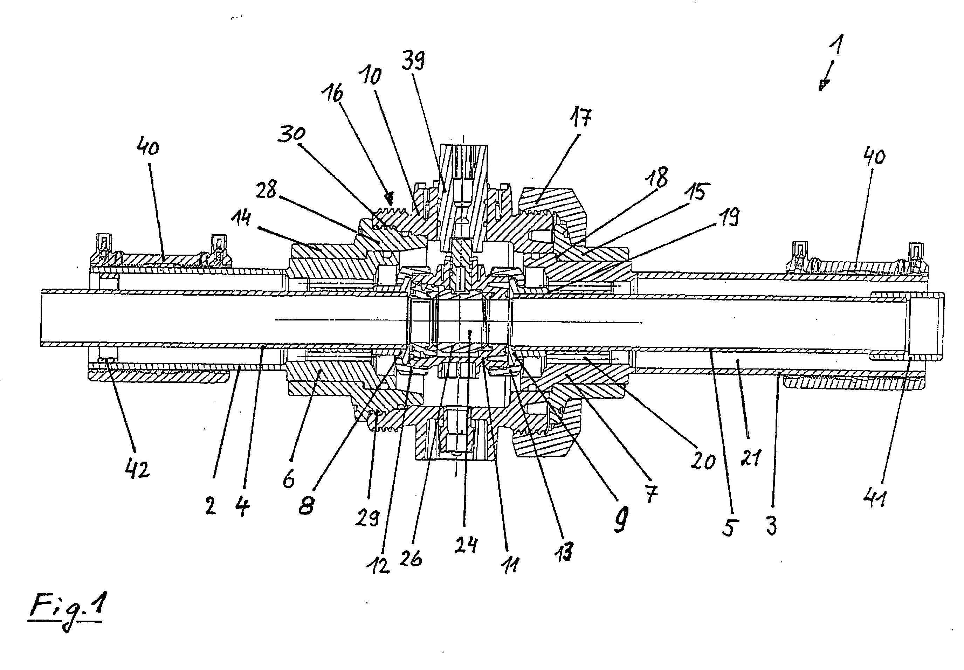

In Figur 1 ist ein System 1 zur Trennung von koaxial angeordneten Doppelrohrleitungen geschnitten entlang der Rohrleitungsachse dargestellt. Das System 1 umfasst zwei koaxial angeordnete Doppelrohrleitungen 2, 3, 4, 5, jeweils bestehend aus einer aussen liegenden Rohrleitung 2, 3 und einer innen liegenden Rohrleitung 4, 5. Für die Nennwerte der Rohrleitungsdurchmesser werden Standardwerte gewählt, wobei die aussen liegende Rohrleitung einen etwa 1,4-bis 2-mal so grossen Durchmesser aufweist als die innen liegende Rohrleitung. Bei kleineren Rohrleitungsdurchmessern bis ca. 60 mm liegt das Verhältnis Aussenrohrdurchmesser zu Innenrohrdurchmesser eher bei 2 und bei grösseren Rohrleitungsdurchmessern ab ca. 100 mm liegt das Verhältnis Aussenrohrdurchmesser zu Innenrohrdurchmesser eher bei 1,4. Hiermit wird erreicht, dass auch für die Armaturen, die zur Trennung bzw. zur Verbindung der koaxial angeordneten Rohrleitungen 2, 3, 4, 5 verwendet werden, Standardarmaturen gewählt werden können.

Die äusseren Rohrleitungen 2, 3 werden mittels Kleben oder Schweissen fest verbunden mit Aussenrohranschlusselementen 6, 7. Die Aussenrohranschlusselemente 6, 7 sind symmetrisch angeordnete, rohrförmig ausgebildete Kunststoffteile, die im Innendurchmesser mit dem Aussendurchmesser der innen liegenden Rohrleitung 4,5 übereinstimmen und mehrere Durchgangsbohrungen 20 für das Medium im Mantelraum 21 des Doppelrohrleitungssystems aufweisen. Das Ende der innen liegende Rohrleitung 4, 5 wird ebenfalls mittels Schweissen oder Kleben fest mit einem inneren Bundbuchsenteil 8, 9 als innenrohranschlusselement 8, 9 verbunden. Zwischen den innen liegenden Bundbuchsenteilen 8, 9 ist ein inneres Verbindungselement 11 angeordnet. Im Beispiel von Figur 1 ist das innere Verbindungselement 11 als ein Ventilgehäuse 24 mit einer Kugel 26 als Verschlussteil 25 ausgebildet. Das innere Verbindungselement 11, hier das Ventilgehäuse 24, wird zwischen den innen liegenden Bundbuchsenteilen 8, 9 lösbar fest gehalten.

Die lösbare Verbindung wird im Beispiel von Figur 1 erreicht durch zwei inneren Überwurfmuttern 12, 13, wie das bei handelsüblichen Kugelhähnen der Fall ist. Zur Verbesserung der Dichtheit zwischen dem inneren Verbindungselement 11 und den Bundbuchsenteilen 8, 9 werden O-Ringe verwendet, die in Figur 1 nicht dargestellt sind. Die lösbare Verbindung kann jedoch auch erreicht werden durch eine vergleichbare Verbindungsart, wie beispielsweise eine Verschraubung oder eine Flansch- oder Klemmverbindung.

Die äussere Rohrleitungen 2,3 werden ebenfalls mit einem äusseren Verbindungselement 10 lösbar mit einander verbunden. Auch das äussere Verbindungselement 10 ist wie ein Ventilgehäuse eines handelsüblichen Kugelhahns ausgebildet. Die lösbare Verbindung besteht aus zwei äusseren Überwurfmuttern 16, 17, einem Bundbuchsenteil 15 und einem Bundbuchsenteil 14 mit einem Einschraubbereich 28. Um die Übersichtlichkeit zu verbessern, wurde in Figur 1 eine äussere Überwurfmutter 16 weggelassen. Auch hier werden zur Verbesserung der Dichtheit des Systems an den dafür vorgesehenen Stellen O-Ringe eingesetzt. Das Bundbuchsenteil 14 weist im Einschraubbereich 28 ein Aussengewinde 29 auf, das zum Innengewinde 30 des äusseren Verbindungselements 10 passt. Da das äussere Verbindungselement 10 als ein Ventilgehäuse eines Kugelhahnes ausgebildet ist, ist ein Innengewinde 30 zur Sicherung des Verschlussteiles bereits vorhanden und kann zum Einschrauben des Bundbuchsenteils 14 verwendet werden.

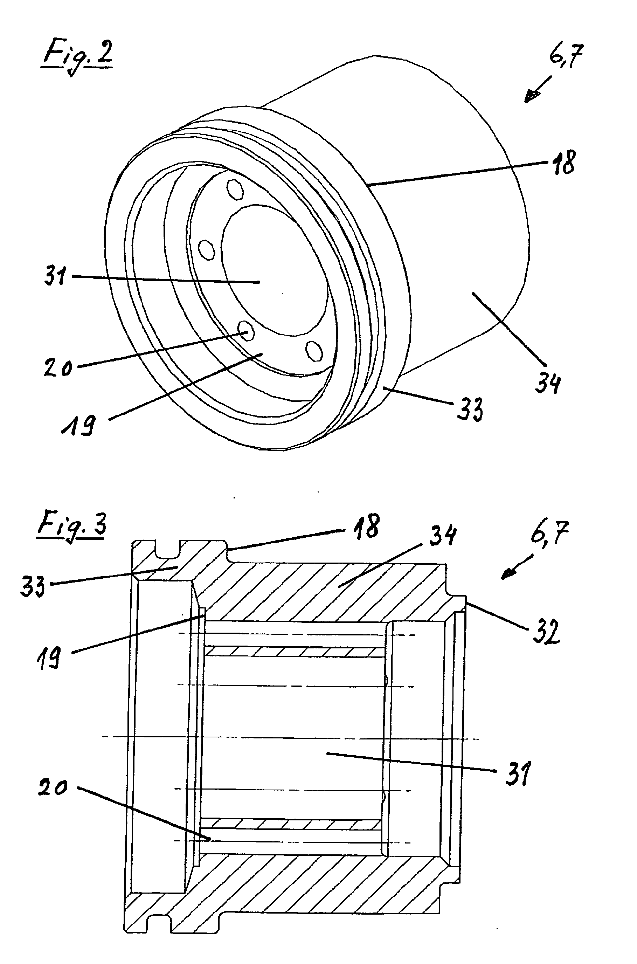

In Figur 2 ist eines der Aussenrohranschlusselemente 6, 7 perspektivisch dargestellt. Die Klemmung und die Zentrierung des Systems 1 zur Trennung von koaxial angeordneten Doppelrohrleitungen 2,3,4,5 wird erreicht durch die Ausbildung von Anschlägen 18, 19 an den Aussenrohranschlusselementen 6, 7. Ein erster Anschlag 18 ist am Aussenumfang als Schulter für die äusseren Bundbuchsenteile 14, 15 ausgebildet. Der zweite Anschlag 19 dient als Auflage für die inneren Bundbuchsenteile 8, 9. In Figur 2 sind die Durchgangsbohrungen 20, der Anschlag 19 für die inneren Bundbuchsenteile 8,9 und der Anschlag 18 für die äusseren Bundbuchsenteile 14,15 ersichtlich.

In Figur 3 ist ein Schnitt durch das Aussenrohranschlusselement 6, 7 dargestellt. Das Aussenrohranschlusselement 6,7 ist ein rohrförmiges Kunststoffteil. Im zentralen Rohr 31 wird die innere Rohrleitung 4,5 des Doppelrohrsystems eingeführt. Am Ende 32 wird die äussere Rohrleitung 2,3 durch Kleben oder Schweissen befestigt. Im Bereich 33 des grössten Aussendurchmessers wird das äussere Verbindungselement 10 dichtend angeordnet. Im hinteren Bereich 34 wird das äussere Bundbuchsenteil 14,15 befestigt.

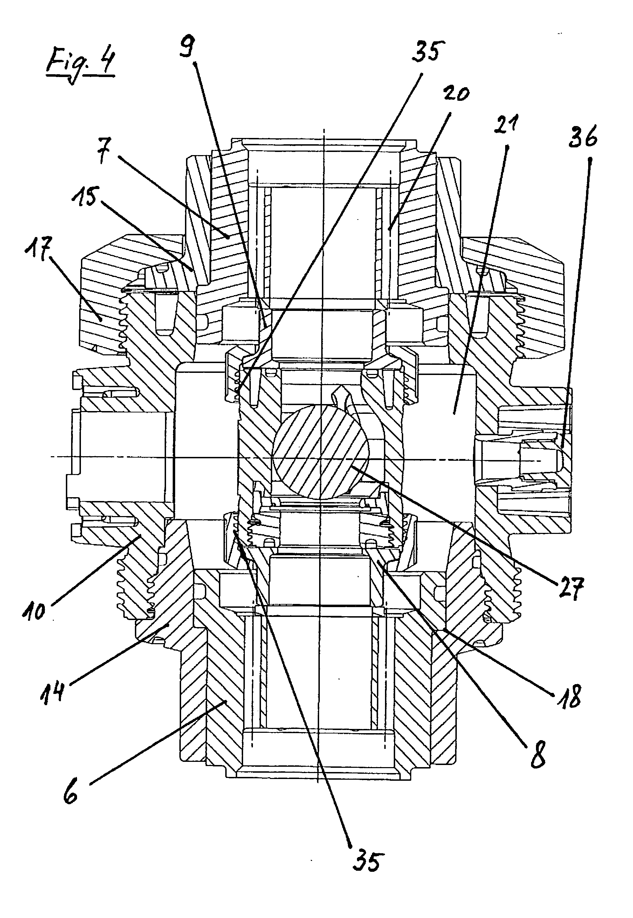

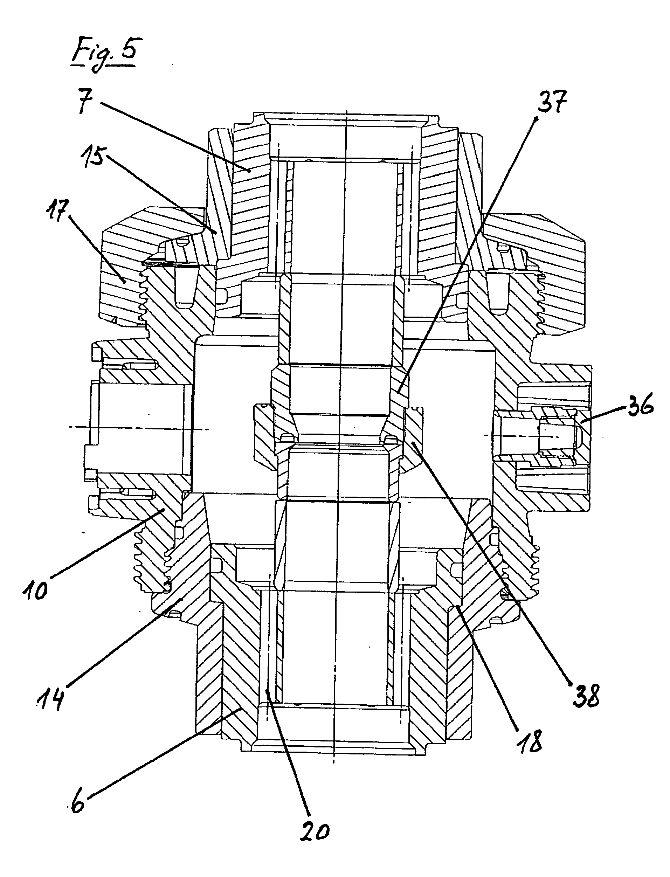

In Figur 4 und Figur 5 sind weitere Ausführungsbeispiele des Systems zur Trennung von koaxial angeordneten Doppelrohrleitungen geschnitten dargestellt. In Figur 4 ist im Unterschied zu Figur 1 statt einen Kugelhahn ein Rückschlagventil 27 eingebaut. Das Rückschlagventil 27 ist auf der Vorder- und Rückseite mit dem gleichen Aussengewinde 35 ausgebildet und kann, je nach Strömungsrichtung des Mediums in der innen liegenden Rohrleitung 4,5 in beiden Richtungen lösbar und klemmend zwischen den inneren Bundbuchsenteile 8, 9 eingebaut werden. Durch den modularen Aufbau des Systems und durch die Verwendung von bestehenden Standardbauteilen wird erreicht, dass das Doppelrohrleitungssystem sehr flexibel an den verschiedenen Anforderungen angepasst werden kann. Im äusseren Verbindungselement 10 ist, wie auch in Figur 1, ein Entleerungsstopfen 36 dargestellt. Bei Leckagen kann das Doppelrohrleitungssystem hier entleert werden. Anstelle des Stopfens 36 kann auch ein Sensor eingebaut werden zur Überwachung der Bedingungen im Mantel 21, beispielsweise Druck, Vakuum,

Temperatur, Gasgehalt oder relative Feuchtigkeit.

In Figur 5 ist als inneres Verbindungselement 11 eine einfache Rohrverschraubung 37 mit einer Überwurfmutter 38 geschnitten dargestellt.

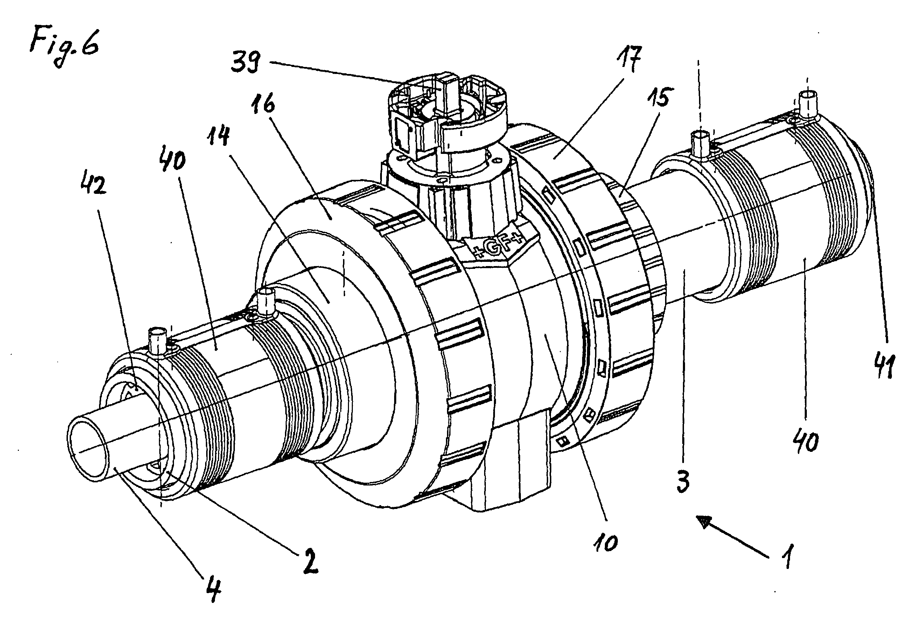

In Figur 6 ist das System zur Trennung von koaxial angeordneten Doppelrohrleitungen 2, 3, 4, 5 von Figur 1 perspektivisch dargestellt. Zur Bedienung des Verschlussteiles 25 oder des Kugelhahnes 26 kann einen Handhebel oder ein elektrischer oder pneumatischer Antriebsmotor aufgesetzt werden. Zur Betätigung des Verschlussteiles 25 des innen liegenden Ventilgehäuses 24 ist ein Kupplungszapfen 39 vorgesehen, der den Übergang vom einen zum anderen Betätigungsbereich der zwei inneren und äusseren Verbindungselementen 10, 11 herstellt. Das System wird beispielsweise mittels Elektroschweissmuffen 40 und Klebemuffen 41 mit den bestehenden Doppelrohrleitungen verbunden. In Figur 6 ist auch ein Distanzhalter 42 zur Zentrierung der koaxial angeordneten inneren und äusseren Rohrleitungen 2, 3, 4, 5 ersichtlich.

## Patentansprüche

1. System (1) zur Trennung von koaxial angeordneten Doppelrohrleitungen (2, 3, 4, 5) umfassend zwei Aussenrohranschlusselemente (6, 7), zwei Innenrohranschlusselemente (8, 9), ein äusseres Verbindungselement (10) zur lösbaren Verbindung mit der Aussenrohrleitung (2, 3) und ein inneres Verbindungselement (11) zur lösbaren Verbindung mit der Innenrohrleitung (4, 5), wobei die lnnenrohranschlusselemente als innere Bundbuchsenteile (8, 9) ausgebildet sind, wobei das innere Verbindungselement (11) mittels Überwurfmuttern (12, 13) lösbar verbunden mit den inneren Bundbuchsenteilen (8, 9) angeordnet ist und wobei das äussere Verbindungselement (10) mittels weitere äussere Bundbuchsenteile (14, 15) und weiteren äusseren Überwurfmuttern (16, 17) lösbar verbunden mit den Aussenrohranschlusselementen (6, 7) angeordnet ist, **dadurch gekennzeichnet, dass** jedes Aussenrohranschlusselement (6, 7) am Aussenumfang einen Anschlag (18) für das äussere Bundbuchsenteil (14, 15) aufweist, dass das Aussenrohranschlusselement (6, 7) am Innenumfang einen Anschlag (19) für das innere Bundbuchsenteil (8, 9) aufweist und dass das Aussenrohranschlusselement (6, 7) Durchgangsbohrungen (20) für das Medium im Mantelraum (21) des Doppelrohrleitungssystems aufweist.

2. System (1) zur Trennung von koaxial angeordneten Doppelrohrleitungen (2, 3, 4, 5) **mit einer Aussenrohrleitung (2,3)** nach dem Anspruch 1, **dadurch gekennzeichnet, dass** das äussere Verbindungselement (10) als ein zum Rohrleitungsdurchmesser der Aussenrohrleitung (2, 3) passendes Kugelhahngehäuse (10) ausgebildet ist.

3. System (1) zur Trennung von koaxial angeordneten Doppelrohrleitungen (2, 3, 4, 5) **mit einer lnnenrohrleitung (4, 5)** nach den Ansprüchen 1 und 2, **dadurch gekennzeichnet, dass** das innere Verbindungselement (11) als ein zum Rohrdurchmesser der Innenrohrleitung (4,5) passendes Rückschlagventil (27) ausgebildet ist.

4. System (1) zur Trennung von koaxial angeordneten Doppelrohrleitungen (2,3,4,5) **mit einer Innenrohrleitung (4, 5)** nach den Ansprüchen 1 und 2, **dadurch gekennzeichnet, dass** das innere Verbindungselement (11) als eine zum Rohrdurchmesser der Innenrohrleitung (4,5) passende Rohrverschraubung (37) mit einer Überwurfmutter (38) ausgebildet ist.

5. System (1) zur Trennung von koaxial angeordneten Doppelrohrleitungen (2,3,4,5) **mit einer Innenrohrleitung (4, 5)** nach den Ansprüchen 1 und 2, **dadurch gekennzeichnet, dass** das innere Verbindungselement (11) als ein zum Rohrdurchmesser der Innenrohrleitung (4,5) passendes Ventilgehäuse (24) mit einem Verschlussteil (25) ausgebildet ist.

6. System (1) zur Trennung von koaxial angeordneten Doppelrohrleitungen (2,3,4,5) **mit einer Innenrohrleitung (4, 5)** nach mindestens einem der Ansprüche 1 oder 4, **dadurch gekennzeichnet, dass** das innere Verbindungselement (11) als ein zum Rohrdurchmesser der Innenrohrleitung (4,5) passendes Ventilgehäuse (24) mit einer Kugel (26) ausgebildet ist.

7. System (1) zur Trennung von koaxial angeordneten Doppelrohrleitungen (2,3,4,5) nach mindestens einem der Ansprüche 1 oder 4 bis 6, **dadurch gekennzeichnet, dass** im äusseren Verbindungselement (10) ein Kupplungszapfen (39) zur Betätigung des Verschlussteiles (25) angeordnet ist

8. System (1) zur Trennung von koaxial angeordneten Doppelrohrleitungen (2,3,4,5) nach mindestens einem der vorgehenden Ansprüche, **dadurch gekennzeichnet, dass** die nicht lösbaren Verbindungen durch Schweissverfahren, insbesondere Elektroschweissen, oder Klebeverfahren herstellbar ausgebildet sind.

9. System (1) zur Trennung von koaxial angeordneten Doppelrohrleitungen (2,3,4,5) nach mindestens einem der vorgehenden Ansprüche, **dadurch gekennzeichnet, dass** die lösbaren Verbindungen durch Klemmverfahren, insbesondere durch Klemmverschraubungen oder Überwurfmuttern herstellbar ausgebildet sind.

## Claims

1. System (1) for separating coaxially arranged double pipelines (2, 3, 4, 5), comprising two outer pipe connection elements (6, 7), two inner pipe connection elements (8, 9), an outer connecting element (10) for detachable connection to the outer pipeline (2, 3) and an inner connecting element (11) for detachable connection to the inner pipeline (4, 5), wherein the inner pipe connection elements are configured as inner flange bushing parts (8, 9), wherein the inner connecting element (11) is arranged detachably connected by means of union nuts (12, 13) to the inner flange bushing parts (8, 9), and wherein the outer connecting element (10) is arranged detachably connected by means of further, outer flange bushing parts (14, 15) and further, outer union nuts (16, 17) to the outer pipe connection elements (6, 7), **characterized in that** each outer pipe connection element (6, 7) has on the outer periphery a stop (18) for the outer flange bushing part (14, 15), **in that** the outer pipe connection element (6, 7) has on the inner periphery a stop (19) for the inner flange bushing part (8, 9), and **in that** the outer pipe connection element (6, 7) has through holes (20) for the medium in the jacket space (21) of the double pipeline system.

2. System (1) for separating coaxially arranged double pipelines (2, 3, 4, 5) having an outer pipeline (2, 3) according to Claim 1, **characterized in that** the outer connecting element (10) is configured as a ball valve housing (10) fitting the pipeline diameter of the outer pipeline (2, 3).

3. System (1) for separating coaxially arranged double pipelines (2, 3, 4, 5) having an inner pipeline (4, 5) according to Claims 1 and 2, **characterized in that** the inner connecting element (11) is configured as a non-return valve (27) fitting the pipe diameter of the inner pipeline (4, 5).

4. System (1) for separating coaxially arranged double pipelines (2, 3, 4, 5) having an inner pipeline (4, 5) according to Claims 1 and 2, **characterized in that** the inner connecting element (11) is configured as a screwed pipe connection (37), fitting the pipe diameter of the inner pipeline (4, 5), with a union nut (38).

5. System (1) for separating coaxially arranged double pipelines (2, 3, 4, 5) having an inner pipeline (4, 5) according to Claims 1 and 2, **characterized in that** the inner connecting element (11) is configured as a valve housing (24), fitting the pipe diameter of the inner pipeline (4, 5), with a closure part (25).

6. System (1) for separating coaxially arranged double pipelines (2, 3, 4, 5) having an inner pipeline (4, 5) according to at least one of Claims 1 or 4, **characterized in that** the inner connecting element (11) is configured as a valve housing (24), fitting the pipe diameter of the inner pipeline (4, 5), with a ball (26).

7. System (1) for separating coaxially arranged double pipelines (2, 3, 4, 5) according to at least one of Claims 1 or 4 to 6, **characterized in that** in the outer connecting element (10) there is disposed a coupling pin (39) for the actuation of the closure part (25).

8. System (1) for separating coaxially arranged double pipelines (2, 3, 4, 5) according to at least one of the preceding claims, **characterized in that** the non-detachable connections are configured such that they can be made by welding methods, in particular electric welding or bonding methods.

9. System (1) for separating coaxially arranged double pipelines (2, 3, 4, 5) according to at least one of the preceding claims, **characterized in that** the detachable connections are configured such that they can be made by clamping methods, in particular by screwed clamping connections or union nuts.

## Revendications

1. Système (1) de séparation de conduites à double tuyau (2, 3, 4, 5) disposées coaxialement, comprenant deux éléments de raccordement de tuyaux extérieurs (6, 7), deux éléments de raccordement de tuyaux intérieurs (8, 9), un élément de raccordement extérieur (10) pour le raccordement desserrable à la conduite à tuyau extérieur (2, 3) et un élément de raccordement intérieur (11) pour le raccordement desserrable à la conduite à tuyau intérieur (4, 5), les éléments de raccordement de tuyaux intérieurs étant réalisés sous forme de pièces de douilles à épaulement internes (8, 9), l'élément de raccordement intérieur (11) étant disposé de manière connectée au moyen d'écrous d'accouplement (12, 13) de manière desserrable aux pièces de douilles à épaulement internes (8, 9) et l'élément de raccordement extérieur (10) étant disposé de manière connectée au moyen d'autres pièces de douilles à épaulement externes (14, 15) et d'autres écrous d'accouplement (16, 17) de manière desserrable aux éléments de raccordement de tuyaux extérieurs (6, 7), **caractérisé en ce que** chaque élément de raccordement aux tuyaux extérieurs (6, 7) présente sur sa périphérie externe une butée (18) pour la pièce de douille à épaulement externe (14, 15), **en ce que** l'élément de raccordement de tuyaux extérieurs (6, 7) présente sur sa périphérie interne une butée (19) pour la pièce de douille à épaulement interne (8, 9) et **en ce que** l'élément de raccordement de tuyaux extérieurs (6, 7) présente des alésages de passage (20) pour le fluide dans l'espace d'enveloppe (21) du système de conduites à double tuyau.

2. Système (1) de séparation de conduites à double tuyau (2, 3, 4, 5) disposées coaxialement, comprenant une conduite à tuyau extérieur (2, 3) selon la revendication 1, **caractérisé en ce que** l'élément de raccordement extérieur (10) est réalisé sous forme d'un boîtier de robinet à boisseau sphérique (10) adapté au diamètre de conduite à tuyau de la conduite à tuyau extérieur (2, 3).

3. Système (1) de séparation de conduites à double tuyau (2, 3, 4, 5) disposées coaxialement, comprenant une conduite à tuyau intérieur (4, 5) selon les revendications 1 et 2, **caractérisé en ce que** l'élément de raccordement intérieur (11) est réalisé sous forme d'un clapet anti-retour (27) adapté au diamètre de tuyau de la conduite à tuyau intérieur (4, 5).

4. Système (1) de séparation de conduites à double tuyau (2, 3, 4, 5) disposées coaxialement, comprenant une conduite à tuyau intérieur (4, 5) selon les revendications 1 et 2, **caractérisé en ce que** l'élément de raccordement intérieur (11) est réalisé sous forme d'un vissage tubulaire (37) avec un écrou d'accouplement (38), adapté au diamètre de tuyau de la conduite à tuyau intérieur (4, 5).

5. Système (1) de séparation de conduites à double tuyau (2, 3, 4, 5) disposées coaxialement, comprenant une conduite à tuyau intérieur (4, 5) selon les revendications 1 et 2, **caractérisé en ce que** l'élément de raccordement intérieur (11) est réalisé sous forme d'un boîtier de soupape (24) avec une partie de fermeture (25), adapté au diamètre de tuyau de la conduite à tuyau intérieur (4, 5).

6. Système (1) de séparation de conduites à double tuyau (2, 3, 4, 5) disposées coaxialement, comprenant une conduite à tuyau intérieur (4, 5) selon au moins l'une quelconque des revendications 1 ou 4, **caractérisé en ce que** l'élément de raccordement intérieur (11) est réalisé sous forme d'un boîtier de soupape (24) avec une bille (26), adapté au diamètre de tuyau de la conduite à tuyau intérieur (4, 5).

7. Système (1) de séparation de conduites à double tuyau (2, 3, 4, 5) disposées coaxialement selon au moins l'une quelconque des revendications 1 ou 4 à 6, **caractérisé en ce qu'**un tourillon d'accouplement (39) est disposé dans l'élément de raccordement extérieur (10) pour l'actionnement de la pièce de fermeture (25).

8. Système (1) de séparation de conduites à double tuyau (2, 3, 4, 5) disposées coaxialement selon au moins l'une quelconque des revendications précédentes, **caractérisé en ce que** les connexions non desserrables sont réalisées de manière à pouvoir être fabriquées par des procédés de soudage, notamment de soudage à l'arc électrique, ou par des procédés de collage.

9. Système (1) de séparation de conduites à double tuyau (2, 3, 4, 5) disposées coaxialement selon au moins l'une quelconque des revendications précédentes, **caractérisé en ce que** les connexions desserrables sont réalisées de manière à pouvoir être fabriquées par des procédés de serrage, notamment par des raccords vissés ou par des écrous d'accouplement.
